# EUROPÄISCHE PATENTANMELDUNG

(11) **EP 4 652 830 A1**
(43) Veröffentlichungstag der Anmeldung: **26.11.2025**
(21) Anmeldenummer: 25178012.8
(22) Anmeldetag: 21.05.2025
(51) Int. Cl.: A01D 57/02, A01D 57/04

(54) **ERNTEBERGUNGSVORRICHTUNG MIT EINER GEGEN ÜBERLAST GESICHERTEN HASPEL**

(30) Priorität: 23.05.2024 DE 102024114532
(71) Anmelder: Carl Geringhoff GmbH & Co. Kommanditgesellschaft, 59227 Ahlen (DE)
(72) Erfinder: Sudhues, Steffen, 59227 Ahlen (DE); Pokriefke, Michael, 27798 Hude (DE)
(74) Vertreter: Weeg, Thomas

(57) **Zusammenfassung**

Die vorliegende Erfindung bezieht sich auf eine Erntebergungsvorrichtung (2) mit einer Haspel (12), die eine Anzahl von Zinkenträgern (22) aufweist, an denen über deren Länge verteilt eine Anzahl von Haspelzinken (28) drehfest montiert sind, wobei die Zinkenträger (22) drehbeweglich mit den Speichenelementen (26) verbunden sind.

Um die Haspelzinken gegen eine Überlast abzusichern, ist jeder Zinkenträger (22) über ein Stützelement (30) gegen einen längenvariablen Kraftspeicher (32) in einer Drehlage gehalten, der unter Einwirken einer Last auf die Haspelzinken (28) eine Ausweichbewegung der Haspelzinken (28) zulässt.

## Beschreibung

Die vorliegende Erfindung bezieht sich auf eine Erntebergungsvorrichtung nach dem Oberbegriff des Anspruchs 1.

Eine gattungsgemäße Erntebergungsvorrichtung mit einer Haspel ist aus der Schrift EP 1 297 735 A1 bekannt. Bei dieser Erntebergungsvorrichtung handelt es sich um ein Getreideschneidwerk, die Erfindung bezieht sich aber auch auf andere Erntebergungsvorrichtungen, die mit einer Haspel versehen sind. Die Schneidvorrichtung besteht aus einem Messerbalken mit oszillierend angetriebenen Messern. Als Fördervorrichtungen verfügt das vorbekannte Getreideschneidwerk über ein endlos umlaufendes Förderband, das das geschnittene Erntegut in einer Richtung quer zur Arbeitsrichtung einer Übergabeschnittstelle in Gestalt einer Übergabeöffnung zum Schrägförderer eines Mähdreschers zufördert, und eine Haspel, die das geschnittene Erntegut auf den Fördertisch des Schneidwerks abwirft, nachdem es vom Messerbalken geschnitten worden ist. Bei anderen Erntebergungsvorrichtungen, auf die sich die Erfindung auch bezieht, werden neben einer Haspel alternativ oder zusätzlich andere Fördervorrichtungen verwendet, wie beispielsweise Querförderschnecken, Kettenförderer, Rotoren und dergleichen.

Der zentrale Tragkörper der Haspel ist bei der vorbekannten Erntebergungsvorrichtung als ein Rohr ausgebildet. Haspelsterne, die in diesem Fall die Speichenelemente bilden, sind mit dem zentralen Tragkörper verschraubt, verspannt oder verschweißt.

Die Haspelzinken sind drehfest an Zinkenträgern montiert, und die Zinkenträger sind drehbeweglich mit den Speichenelementen verbunden. Die Zinkenträger sind an zumindest einem ihrer Enden jeweils fest mit einer Treibstange verbunden, deren dem Zinkenträger abgewandtes Ende in einer Kurvenbahn gehalten ist. Bei einer Rotationsbewegung der Haspel folgen die in der Kurvenbahn gehaltenen Enden der Treibstangen dem Verlauf der Kurvenbahn. Aus den sich im Verlauf einer Umdrehung der Haspel verändernden Abständen der Kurvenbahn vom Hüllkreis der Haspel ergeben sich unterschiedliche Drehwinkelstellungen der mit der Haspel umlaufenden Treibstangen relativ zum Hüllkreis der Haspel, und aus den unterschiedlichen Drehwinkelstellungen resultieren Drehbewegungen der Zinkenträger, mit denen die äußeren Spitzen der Haspelzinken nach außen oder innen schwenken. Auf diese Weise ergibt sich eine zwangsgesteuerte unrunde Bewegungsbahn der äußeren Spitzen der Haspelzinken.

Sinn der zwangsgesteuerten Bewegung der Spitzen der Haspelzinken ist es, die Zinkenspitzen beim ersten Kontakt mit dem Erntegut möglichst weit nach vorne in Arbeitsrichtung der Erntemaschine, die die Erntebergungsvorrichtung trägt, ausgreifen zu lassen, um mit diesen das Erntegut möglichst früh zu fassen und mit einer fortschreitenden Drehbewegung bei einer weiteren Absenkung in Richtung des Bodens und rücklaufenden Bewegung des betreffenden Zinkenträgers in Richtung der Fördervorrichtungen zu werfen.

Im Allgemeinen haben zwangsgesteuerte Haspelzinken, die an Zinkenträgern befestigt sind, die drehbeweglich an den sie tragenden Speichenelementen gelagert sind, eine gute Funktion. Probleme können sich allerdings ergeben, wenn die Haspelzinken bei ihrer Rotationsbewegung den Boden berühren und/oder wenn die Materialmenge des zu erntenden Ernteguts - beispielsweise bei Lagergetreide - so groß oder schwer aufzunehmen ist, dass sie die Spitzen der Haspelzinken verbiegt oder auch die Haspelzinken in die Zinkenträger nach oben drückt. Insbesondere bei den immer weiter wachsenden Arbeitsbreiten der Erntebergungsvorrichtungen können dabei Kräfte entstehen, durch die sich die Zinkenträger oder auch die Speichenelemente dauerhaft verformen und repariert werden müssen. Durch die Zwangsführung können die Haspelzinken die Belastungsspitzen nicht durch eine Ausweichbewegung verringern. In der Praxis behilft man sich zwar mit flexiblen Materialien, aus denen die Haspelzinken hergestellt sein können. Aus weicheren Materialien hergestellte Haspelzinken haben aber keine optimale Griffigkeit mehr. Die sich bei einer Ausweichbewegung der flexiblen Haspelzinken darin aufbauenden Rückstellkräfte wirken gleichwohl auf die Zinkenträger und die Speichenelemente ein, die deshalb eine höhere Festigkeit und daraus folgend ein höheres Gewicht aufweisen müssen. Über die immer weiter wachsenden Arbeitsbreiten der Erntebergungsvorrichtungen ergeben sich daraus erhebliche Zusatzgewichte, die letztlich auch zu stärker dimensionierten Antrieben, stärker dimensionierten Tragvorrichtungen an der Erntemaschine und durch das höhere Maschinengewicht einer höheren Bodenverdichtung in der bearbeiteten Fläche führen.

Es ist die Aufgabe der vorliegenden Erfindung, eine Erntebergungsvorrichtung mit einer Haspel vorzuschlagen, die aus einem Bodenkontakt der Spitzen der Haspelzinken resultierende oder aus einer größeren Erntegutmenge auf die Haspelzinken einwirkende höhere Kräfte aufzunehmen vermag, ohne dass es dafür erforderlich ist, das Gewicht der potentiell von einer Überlast beschädigten Bauteile der Haspel erheblich zu erhöhen.

Die Aufgabe wird durch die kennzeichnenden Merkmale des Anspruchs 1 gelöst.

Die Zinkenträger sind über ein Drehlager jeweils drehbeweglich mit den Speichenelementen verbunden. Drehbeweglich bedeutet hier, dass die Zinkenträger in einer ersten beispielhaften Ausgestaltung drehbeweglich in Drehlagern gelagert sein können, die ortsfest mit den Speichenelementen verbunden sind. Die Zinkenträger sind damit nur um ihre Längsachse drehbeweglich. In einer zweiten alternativen und beispielhaften Ausgestaltung können die Zinkenträger aber auch drehbeweglich mit den Speichenelementen verbunden sein, indem die Zinkenträger drehfest an Laschen gehalten sind, die ihrerseits über ein ortsfestes Drehgelenk verdrehbar mit den Speichenelementen verbunden sind. Die Zinkenträger sind dann über eine Verschwenkbewegung der Laschen drehbeweglich mit den Speichenelementen verbunden. In einer dritten beispielhaften Ausgestaltung der Drehbeweglichkeit können die Zinkenträger auch drehbar in einem Drehlager in den Laschen gelagert sein, die ihrerseits nochmals über eine Gelenkverbindung mit den Speichenelementen verbunden sind. Die Drehbeweglichkeit im Sinne der Erfindung ist also weit zu verstehen.

Jeder Zinkenträger ist über Verbindungsmittel mit einem diesem Zinkenträger zugeordneten Stützelement verbunden und damit in einer Drehlage gehalten. Da die Zinkenträger drehbeweglich mit den Speichenelementen verbunden sind, können sie theoretisch verschiedene Drehlagen einnehmen. Um ihre Funktion, das Erntegut beim Schnitt zu stützen und den nachgeordneten Förderorganen zu übergeben, erfüllen zu können, müssen die Haspelzinken und insbesondere die Spitzen der Haspelzinken bei der Rotation der Haspel aber in einer definierten Stellung stehen. Deshalb ist es nicht gleichgültig, in welcher Drehlage die Zinkenträger gehalten sind. Um die Zinkenträger in einer gewünschten Drehlage zu halten, ist jeder Zinkenträger mit einem zugeordneten Stützelement verbunden, bei dem sich über die Verbindungsmittel, über die das Stützelement mit dem Zinkenträger verbunden ist, eine technisch vorteilhafte Drehlage des jeweiligen Zinkenträgers und damit auch der drehfest daran befestigten Haspelzinken einstellt.

Als Stützelemente kommen verschiedene Bauteile in Betracht. Es kann sich um ein starres oder bewegliches Gestänge, starre oder bewegliche Haltelaschen, eine Blechkonstruktion oder ein vergleichbares Bauteil handeln. Das Stützelement kann mit dem zentralen Tragkörper verbunden und seinerseits darauf abgestützt sein, so dass es zusammen mit der Haspel rotiert. Die auf die Haspelzinken einwirkenden Kräfte werden dann auf den zentralen Tragkörper übertragen.

Die Stützelemente sind an einem Exzenterantrieb abgestützt, der die Stützelemente während einer vollen Umdrehung der Haspel in radialer Richtung in unterschiedliche Positionen zum Tragkörper bewegt. Der Exzenterantrieb kann beispielsweise als eine Kurvenbahn ausgebildet sein, die exzentrisch zur Rotationsache der Haspel angeordnet ist und/oder die nicht in einer Kreisform verläuft. Die Rotationsachse der Haspel entspricht ihrer Längsachse.

Zwischen dem Exzenterantrieb und einer Verbindung eines jeweiligen Stützelements mit einem zugehörigen Zinkenträger ist ein längenvariabler Kraftspeicher zwischengeschaltet, der unter Einwirken einer Last auf die Haspelzinken eine Ausweichbewegung der Haspelzinken zulässt. Die Angabe, wonach zwischen dem Exzenterantrieb und der Verbindung des Stützelements mit dem zugehörigen Zinkenträger ein längenvariabler Kraftspeicher zwischengeschaltet ist, ist so zu verstehen, dass in dem Exzenterantrieb selbst und an jedem weiteren Bauteil, das die vom Exzenterantrieb erzeugte Stellkraft auf den Zinkenträger überträgt, ein längenvariabler Kraftspeicher angeordnet sein kann.

Als Kraftspeicher können beispielsweise Schrauben- oder Blattfedern, Gummipuffer, Gasdruckfedern und dergleichen verwendet werden. Der Kraftspeicher nimmt bei einer Verformung, insbesondere einer Längenänderung, Kräfte in sich auf, die als Rückstellkräfte wirken, wenn die einwirkende Last wieder wegfällt. Die Rückstellkräfte bauen sich je nach Auslegung der Konstruktion durch eine Stauchung oder Dehnung des Kraftspeichers auf. Sie verringern sich wieder, je mehr sich der Kraftspeicher wieder seiner Ursprungsform und insbesondere seiner Ursprungslänge annähert. Fällt eine Überlast weg, durch die sich die Länge des Kraftspeichers verändert hat, nimmt der Kraftspeicher durch die Rückstellkräfte wieder seine Ausgangsstellung ein, und auch der Zinkenträger mit den daran befestigten Haspelzinken befindet sich wieder in der Drehlage, in der er sich befand, bevor die Überlast auf die Haspelzinken einzuwirken begann. Der Kraftspeicher ist auf diese Weise selbstregulierend. Er benötigt keine Schaltung oder aktive Steuerung oder Regelung. Er stellt sich selbsttätig auf eine Länge ein, die zu der einwirkenden Überlast in der Weise passt, indem sich aus dieser Länge eine für die jeweils einwirkende Last technisch vorteilhafte Drehlage des Zinkenträgers und daraus folgend der Haspelzinken ergibt. Da die Drehbewegung der Haspel die Haspelzinken im Bereich ihres tiefsten Punkts während einer Umdrehung der Haspel auf den Boden und auf das Erntegut zubewegt, ist eine Ausweichbewegung der Haspelzinken in eine Richtung entgegen der Rotationsrichtung der Haspel geeignet, auftretende Lastspitzen zu verringern und die Haspelzinken vor einer möglichen Überlast zu bewahren.

Das Verformungsverhalten des Kraftspeichers, insbesondere dessen Längenveränderungsverhalten, kann über dessen Form, das verwendete Material, die Materialstärken und dergleichen so eingestellt werden, dass er sich nicht oder nur unwesentlich verformt, solange sich die auf die Haspelzinken einwirkenden Kräfte unterhalb eines Levels halten, bei dem keine bleibenden Beschädigungen an dem Haspelzinken oder dem Zinkenträger zu befürchten sind. Die Kräfte, die unterhalb dieses Levels auf die Haspelzinken einwirken, sind normale Lasten, die im regulären Betrieb der Erntebergungsvorrichtung auftreten. Im Normalbetrieb der Erntebergungsvorrichtung behalten die Spitzen der Haspelzinken dadurch eine Position und Ausrichtung, die beim Erntebetrieb eine gute Abstützung des Ernteguts beim Schnitt und eine gute Übergabe des geschnittenen Ernteguts vom Acker an die Fördervorrichtungen ermöglichen. Überschreiten einwirkende Lasten jedoch diesen Level und erreichen ein Überlast-Niveau, verändert der Kraftspeicher seine Form, insbesondere seine Länge, und ermöglicht dadurch den Haspelzinken, durch eine Drehbewegung des Zinkenträgers um seine Drehachse in eine andere Drehlage der einwirkenden Überlast zumindest teilweise auszuweichen und diese dadurch zu verringern. Auf diese Weise dient der längenvariable Kraftspeicher als eine Überlastsicherung.

Die vom Kraftspeicher aufgenommene Überlast wird auf den zentralen Tragkörper übertragen. Die Gefahr, dass ein Zinkenträger durch eine auf die Haspelzinken einwirkende Überlast dauerhaft verformt und beschädigt werden könnte, ist dadurch erheblich verringert. Reparaturbedingte Ausfallzeiten der Erntebergungsvorrichtung und entsprechende Reparaturkosten werden deutlich verringert. Die Zinkenträger und die Speichenelemente können auf niedrigere Lastannahmen ausgelegt werden, wodurch deren Gewicht und damit das Gewicht der Haspel insgesamt sinkt.

Wenn jeder Zinkenträger einer Haspel einwirkende Überlasten über einen Kraftspeicher auf den zentralen Tragkörper übertragen kann, ist es möglich, dass nur derjenige Zinkenträger mit einer Drehbewegung in eine neue Drehlage einer einwirkenden Überlastung ausweicht, auf den die Überlast tatsächlich auch einwirkt. Die Haspelzinken derjenigen Zinkenträger, die keiner Überlast ausgesetzt sind, bleiben in ihrer der Normalstellung entsprechenden Drehlage, sodass die nicht mit einer Überlast beaufschlagten Zinkenträger bei einer andauernden Rotation ihre normale Förderwirkung beibehalten. Zudem wird jeder Zinkenträger, dessen Haspelzinken einer Überlast ausgesetzt sind, individuell nur so weit in seiner Drehlage verstellt, wie das erforderlich ist, um die auf ihn einwirkende Überlast zu verringern. Auch dadurch wird selbst bei einer einwirkenden Überlast die normale Förderfunktion der Haspel durch das Wegdrehen der Haspelzinken über die Veränderung der Drehlage der Zinkenträger nur so viel wie nötig beeinträchtigt.

Die Haspel arbeitet als eine Art drehbarer Rechen mit einer genau oder zumindest im Wesentlichen zylindrischen Grundform, deren Längsachse sich in einer Richtung quer zur Arbeitsrichtung der Erntebergungsvorrichtung erstreckt. Die Haspel stützt das zu schneidende Erntegut beim Schnitt im oberen Bereich ab oder recht es - beispielsweise bei Lagergetreide - vom Boden auf und gibt es nach erfolgtem Schnitt in den Wirkbereich der in Förderrichtung des Ernteguts hinter der Schneidvorrichtung befindlichen Fördervorrichtungen ab.

Der zentrale Tragkörper kann aus einem einzigen Rohrstück gebildet sein, oder es sind mehrere Rohrstücke zu einem zentralen Rohrkörper zusammengefügt, insbesondere in Erstreckungsrichtung aufeinanderfolgend zusammensetzt. Der zentrale Rohrkörper kann aus einem geschlossenen Rohr bestehen oder in einer offenen Bauweise gestaltet sein, beispielsweise mit Durchbrechungen in der Rohrwand oder mit mehreren beispielsweise kreisförmig angeordneten Rohren, die zusammen über die Arbeitsbreite der Erntebergungsvorrichtung oder in einzelnen Teilabschnitten den zentralen Rohrkörper bilden.

Die Speichenelemente können als Blechstern ausgestaltet sein, es können aber auch pro Speiche einzelne Streben verbaut sein, oder ein Speichenelement ist aus mehreren Bauteilen zusammengesetzt.

Nach einer Ausgestaltung der Erfindung weist der Exzenterantrieb eine Kulissenbahn auf, in der die Stützelemente an einem jeweiligen Ende geführt sind, ein Wandabschnitt der Kulissenbahn ist beweglich gelagert, und der beweglich gelagerte Wandabschnitt der Kulissenbahn ist gegen einen längenvariablen Kraftspeicher abgestützt. Eine herkömmliche Kulissenbahn führt ein jeweiliges Ende eines Stützelements ohne große Toleranzen genau an dem Verlauf der Kulissenbahn entlang. Da die räumliche Lage der Stützelemente im Verhältnis zur Rotationsachse der Haspel über entsprechende Koppelelemente die Schwenklage der vom jeweiligen Stützelement gesteuerten Haspelzinken bestimmt und die Kulissenbahn dazu vorgesehen ist, die Haspelzinken im Verlauf einer Umdrehung der Haspel auf genau eine der Drehstellung der Haspel entsprechende Schwenkstellung einzustellen, sind in der Kulissenbahn Toleranzen in der Führung des Stützelements im Normalbetrieb unerwünscht. Feste seitliche Wände der Kulissenbahn zwingen das jeweilige Ende eines Stützelements und damit auch den zugehörigen Zinkenträger über die jeweilige räumliche Lage des zugehörigen Stützelements dazu, auch unter Einwirkung einer höheren Last auf die Haspelzinken die durch die Kurvenbahn vorgegebene Schwenkstellung beizubehalten.

Durch die bewegliche Lagerung eines Wandabschnitts der Kurvenbahn ist es nun möglich, dass das in der Kulissenbahn geführte jeweilige Ende eines Stützelements im Bereich dieses Wandabschnitts um das Maß von der vorgegebenen Kurvenbahn abweichen kann, um das der beweglich gelagerte Wandabschnitt einschwenkt. Durch die Abstützung des beweglich gelagerten Wandabschnitts gegen einen längenvariablen Kraftspeicher schwenkt der beweglich gelagerte Wandabschnitt aber nur dann aus seiner Normalstellung aus, wenn auf den Wandabschnitt eine Kraft einwirkt, die größer ist als die Widerstandskraft, die der längenvariable Kraftspeicher einer Längenverkürzung entgegensetzt. Wenn der längenvariable Kraftspeicher so ausgestaltet ist, dass er eine Einschwenkbewegung des beweglichen Wandabschnitts erst dann zulässt, wenn Kräfte auf die Haspelzinken einwirken, die nahe einer Überlast liegen, wirkt der durch den längenvariablen Kraftspeicher abgestützte Wandabschnitt als eine Überlastsicherung, die durch eine Ausweichbewegung auf die Haspelzinken einwirkende Kräfte auf den längenvariablen Kraftspeicher überträgt und die dieser auf den zentralen Tragkörper ableitet. Da die freien Enden der Haspelzinken bei einer Verschwenkbewegung entgegen der Rotationsrichtung der Haspel nach hinten weggeschwenkt werden, verringern sich die Kräfte, denen die Haspelzinken ausgesetzt sind, weil dabei der Abstand der freien Enden der Haspelzinken zum Boden und zum Erntegut größer wird. Vorteilhaft baut der längenvariable Kraftspeicher dabei Rückstellkräfte auf, durch die der bewegliche Wandabschnitt nach Fortfall der Überlast in die Ausgangsstellung zurückbewegt wird, wobei auch die Stützelemente und die von ihnen bewegten Zinkenträger wieder in die Normalstellung zurückbewegt werden.

Nach einer Ausgestaltung der Erfindung weist der beweglich gelagerte Wandabschnitt an seinem in Rotationsrichtung der Haspel gesehen hinteren Ende ein Schwenklager auf und ist an seinem vorderen Ende vom längenvariablen Kraftspeicher abgestützt. Indem der beweglich gelagerte Wandabschnitt um das am hinteren Ende befindliche Schwenklager dreht und das vordere Ende gegen die Kraft des längenvariablen Kraftspeichers eintaucht, werden ruckartige Einfederbewegungen der Stützelemente vermieden. Aufgrund des Hebelgesetzes taucht der beweglich gelagerte Wandabschnitt bei einer einwirkenden Kraft umso tiefer gegen den längenvariablen Kraftspeicher ein, je weiter der Kontaktpunkt des Stützelements mit dem beweglich gelagerten Wandabschnitt vom Schwenklager entfernt ist. Bei der vorgeschlagenen Ausgestaltung ist das am vorderen Ende des beweglich gelagerten Wandabschnitts der Fall. Wenn sich die an einem Zinkenträger befestigten Haspelzinken noch weiter nach unten absenken, wenn sich das von der Kurvenbahn gesteuerte Ende des Stützelements in diesem Teil des beweglichen Wandabschnitts befindet, ergibt sich daraus ein sehr weiches Anfederverhalten des beweglich gelagerten Wandabschnitts. Je weiter sich das kurvenbahngesteuerte Ende eines Stützelements allerdings während einer Umdrehung an dem beweglich gelagerten Wandabschnitt entlang bewegt, umso kleiner werden die Hebelkräfte, die eine Einfederbewegung unterstützen, und umso weniger leicht federt der beweglich gelagerte Wandabschnitt tatsächlich ein. Da sich die mit dem Stützelement verbundenen Haspelzinken allerdings ihrer tiefsten Position nähern, können sich durch die Rotationsbewegung der Haspel die auf die Haspelzinken einwirkenden Gegenkräfte allerdings auch erhöhen. Durch diesen gegenläufigen Kraftverlauf können die Haspelzinken annähernd ihre Solllage behalten, und nur bei erheblichen Überlasten, die insbesondere auch als Kraftspitze auftreten können, würde der beweglich gelagerte Wandabschnitt weiter einfedern und dadurch eine Ausweichbewegung der Haspelzinken ermöglichen. Die Ausweichbewegungen des beweglich gelagerten Wandabschnitts sind dabei fließend, woraus sich eher gleichmäßige Schwenkbewegungen der Haspelzinken ergeben. Erreicht ein in der Kulissenbahn geführtes Ende eines Stützelements unter Einwirkung einer Überlast das in Rotationsrichtung gelegene Ende des beweglich gelagerten Wandabschnitts, so ist dort der beweglich gelagerte Wandabschnitt am wenigsten flexibel, da sich dort die Schwenkachse befindet. Die Kurvenbahn sollte deshalb so angelegt sein, dass ein in der Kurvenbahn geführtes Ende eines Stützelements das hintere Ende des beweglich gelagerten Wandabschnitts und damit die Position der Schwenkachse erst dann erreicht, wenn die Spitzen der Haspelzinken während einer Umdrehung den untersten Totpunkt bereits passiert haben.

Nach einer Ausgestaltung der Erfindung befindet sich der beweglich gelagerte Wandabschnitt in einem Abschnitt der Kulissenbahn, in dem die Kulissenbahn die Stützelemente führt, deren Zinkenträger sich bei einer Rotationsbewegung der Haspel im Bereich der tiefsten Position während eines Umlaufs bewegen. Bei der Bewegung der Haspelzinken in Bodennähe und im Abgabebereich des von den Haspelzinken erfassten Ernteguts an die Erntewerbungsvorrichtung, bei der sich die Haspelzinken im Bereich ihrer tiefsten Position während eines Umlaufs befinden, wirken die höchsten Kräfte auf die Haspelzinken ein. Aus diesem Grund ist es vorteilhaft, den beweglich gelagerten Wandabschnitt in dem Abschnitt der Kulissenbahn anzuordnen, in dem die Kulissenbahn die Stützelemente führt, deren Zinkenträger sich bei einer Rotationsbewegung der Haspel im Bereich der tiefsten Position während eines Umlaufs bewegen.

Nach einer Ausgestaltung der Erfindung federt der beweglich gelagerte Wandabschnitt gegen die Kraft des längenvariablen Kraftspeichers in radialer Richtung auf die Längsachse der Haspel zu ein. Bei einer Einfederbewegung des beweglich gelagerten Wandabschnitts in die Richtung der Längsachse der Haspel bewegt sich der beweglich gelagerte Wandabschnitt vom Erntegut weg, das sich am Außenumfang der Haspel befindet. Das Risiko, dass sich an dem beweglich gelagerten Wandabschnitt Erntegut anlagern und sich an der Haspel aufwickeln könnte, wird dadurch verringert. Auch der längenvariable Kraftspeicher befindet sich bei dieser Anordnung in einem vom Erntegut entfernten Bereich, so dass auch dort das Risiko verringert ist, Erntegut mitzunehmen und aufzuwickeln. Die Einfederbewegung des beweglich gelagerten Wandabschnitts tiefer in den Innenraum der Haspel hinein ist auch deshalb vorteilhaft, weil dort ausreichend Bauraum zur Verfügung steht und sich der Umfang der Kulissenbahn nach außen hin nicht vergrößert.

Nach einer Ausgestaltung der Erfindung sind die Stützelemente den Zinkenträgern in Rotationsrichtung nacheilend angeordnet. Bei einer nacheilenden Anordnung der Stützelemente werden diese bei einer durch eine Überlast ausgelösten Einfederbewegung in die Richtung der Längsachse der Haspel bewegt. Im Schatten der Haspelzinken ist das Risiko kleiner, dass die Stützelemente Erntegut mitnehmen und dieses an der Haspel aufwickeln könnten.

Nach einer Ausgestaltung der Erfindung ist zwischen dem Zinkenträger und dem Stützelement ein längenvariabler Kraftspeicher zwischengeschaltet, der unter Einwirken einer Last auf die Haspelzinken eine Ausweichbewegung der Haspelzinken zulässt. Bei dieser Lösung handelt es sich um ein zum vorstehend beschriebenen Ausführungsbeispiel alternative Ausgestaltung der Erfindung. Bei diesem Ausführungsbeispiel ist der längenvariable Kraftspeicher nicht im Bereich des Exzenterantriebs, sondern im Bereich zwischen dem Zinkenträger und dem Stützelement angeordnet.

Nach einer Ausgestaltung der Erfindung sind die Stützelemente und Kraftspeicher an zumindest einer Stirnseite der Haspel angeordnet. An den Stirnseiten der Haspel lassen sich die Stützelemente und die Kraftspeicher gut montieren und warten, weil sie dort gut zugänglich sind. Weil die Haspel an ihren Stirnseiten von den Haltearmen gehalten wird, befindet sich auch das aus den Stützelementen und den Kraftspeichern resultierende Zusatzgewicht in unmittelbarer Nähe der Haltearme, sodass der zentrale Rohrkörper keine zusätzlichen Hebelkräfte aus dem Gewicht der Stützelemente tragen muss. Um eine auf die Haspelzinken eines Zinkenträgers einwirkende Überlast über einen Kraftspeicher und ein Stützelement auf den zentralen Rohrkörper abzuleiten, kann es ausreichen, diese Maschinenelemente nur an einer Stirnseite der Haspel anzuordnen.

Nach einer Ausgestaltung der Erfindung sind die Zinkenträger drehbeweglich mit den Speichenelementen verbunden, indem die Zinkenträger drehfest an Laschen gehalten sind, die ihrerseits über ein Drehgelenk verdrehbar mit den Speichenelementen verbunden sind, und ein einem Zinkenträger zugeordneter Kraftspeicher ist zumindest mit einer Lasche des zugeordneten Zinkenträgers und wahlweise auch mit dem ihm zugeordneten Stützelement über Drehgelenke drehbeweglich verbunden. Je nach Längen- und Breitenmaßen der Laschen, der Position des Zinkenträgers an einer Lasche, der Platzierung der Drehgelenke an der Lasche und dem Kraftspeicher und der Länge des Verstellwegs, um den die Länge des Kraftspeichers veränderlich ist, ergeben sich Verstellwege, um die die Position eines Zinkenträgers und damit auch der Spitzen der Haspelzinken, die ortsfest am Zinkenträger befestigt sind, unter Einwirkung einer Überlast relativ zur übrigen Haspel maximal veränderlich ist. Die entsprechenden Abmessungen und Positionen der Bauteile können so gewählt werden, dass sich ein für die jeweilige Anwendung ausreichender maximaler Verstellweg unter einer einwirkenden Überlast für die Spitzen der Haspelzinken einstellt.

Durch die verschiedenen drehbeweglichen Verbindungen der Bauteile miteinander ergibt sich für einen einzelnen Zinkenträger eine zumindest dreigelenkige Verbindung der mit dem Zinkenträger verbundenen Laschen mit den Speichenelementen und dem Kraftspeicher. Die drehbewegliche Verbindung einer Lasche mit den Speichenelementen kann dabei das erste Gelenk bilden. Die drehbewegliche Verbindung zumindest einer dem Zinkenträger zugeordneten Lasche mit dem zugeordneten Kraftspeicher kann das zweite Gelenk bilden. Die drehbewegliche Verbindung des Kraftspeichers mit dem Zwischenelement kann das dritte Gelenk bilden. Diese zumindest dreigelenkige Verbindung der Bauteile miteinander legt einen Verstellweg fest, innerhalb dessen sich der Zinkenträger unter Einwirkung einer Überlast bewegen kann.

Nach einer Ausgestaltung der Erfindung ist der einem Zinkenträger zugeordnete Kraftspeicher an seinem dem Zinkenträger zugewandten Ende an ein Führungselement angebunden, dessen Beweglichkeit mittels einer Führungskulisse zwangsgeführt ist, und der Zinkenträger ist direkt oder indirekt nur über ein Drehgelenk mit dem Führungselement mittelbar mit dem Kraftspeicher verbunden. Durch die Verbindung des Zinkenträgers mit dem diesem Zinkenträger zugeordneten Kraftspeicher über das die Verbindung vermittelnde und in einer Führungskulisse zwangsgeführte Führungselement wird sichergestellt, dass die sich aus der Längenveränderung des Kraftspeichers ergebende Bewegungskomponente, die den Verstellweg des Zinkenträgers bei einer einwirkenden Überlast mitbestimmt, von einer definierten Bewegungsbahn abgenommen wird, von der der Kraftspeicher nicht abweichen kann. Das zwangsgeführte Führungselement bestimmt somit sowohl den Verstellweg, den der Kraftspeicher unter Einwirkung einer Überlast nimmt, als auch die Länge und Richtung der Bewegungskomponente, die in den Verstellweg des Zinkenträgers unter Einwirkung einer Überlast einfließt. Als Führungskulisse für eine Zwangsführung kommt beispielsweise eine Führungsstange in Betracht, an der als Führungselement eine Schiebemuffe geführt ist, mit der der Kraftspeicher und der Zinkenträger mittelbar oder unmittelbar verbunden sind. Bei einer Längenveränderung des Kraftspeichers verändert sich die Position der Schiebemuffe auf der Führungsstange entsprechend, und die Schiebemuffe nimmt bei einer Lageveränderung an der Führungsstange den damit verbundenen Zinkenträger entsprechend den geometrischen Verhältnissen der Verbindung mit.

Nach einer Ausgestaltung der Erfindung ist die Führungskulisse als ein Exzenterantrieb ausgestaltet. Ein Exzenterantrieb ist technisch leicht und kostengünstig umsetzbar, er funktioniert rein mechanisch und ist nahezu wartungsfrei. Er beansprucht an einer Stirnseite der Haspel nur wenig Bauraum und gewährleistet über die Lebensdauer des Erntebergungsvorsatzes hinweg eine zuverlässig funktionierende Bewegungssteuerung der Haspelzinken.

Nach einer Ausgestaltung der Erfindung ist die Führungskulisse mit einer in einer radialen Richtung zur Drehachse der Haspel beweglich angetriebenen Treibstange verbunden, und das dem Zinkenträger abgewandte Ende des Kraftspeichers ist an einer fixen Position befestigt. Die Führungskulisse kann beispielsweise als ein Exzenterantrieb ausgestaltet sein. Um die Bewegungen eines zum Exzenterantrieb gehörenden Exzenterrings auf die Haspelzinken zu übertragen, kann die Führungskulisse mit einer in einer radialen Richtung zur Drehachse der Haspel beweglich angetriebenen Treibstange verbunden sein, und das dem Zinkenträger abgewandte Ende des Kraftspeichers ist an einer fixen Position befestigt. Über die angetriebene Treibstange ist die Möglichkeit eröffnet, in die Bewegung des Zinkenträgers eine weitere Bewegungskomponente einzubringen, über die die Haspelzinken im Verhältnis zur Haspel nicht mehr in der Normalstellung feststehen, in der keine Überlast auf sie einwirkt, sondern im Verlauf einer Umdrehung der Haspel einer von der Treibstange induzierten Bewegungskurve folgen. Indem das dem Zinkenträger abgewandte Ende des Kraftspeichers an einer fixen Position befestigt ist, bleibt nur das nach außen weisende Ende des Kraftspeichers entlang des Verstellwegs beweglich, um eine einwirkende Überlast aufzufangen. Die fixe Position, an der sich das dem Zinkenträger abgewandte Ende des Kraftspeichers befindet, kann insbesondere auch an der Treibstange angeordnet sein. Wenn dann die Treibstange in eine Richtung bewegt wird, folgen der Kraftspeicher und das mit der Treibstange als Führungskulisse verbundene Führungselement den Bewegungen der Treibstange. Da der Zinkenträger mit dem Führungselement verbunden ist, wird die aus der Bewegung der Treibstange auf das Führungselement übertragene Bewegungskomponente auch auf den Zinkenträger übertragen. Da die vom Führungselement auf den Zinkenträger übertragenen Bewegungen die Drehlage des Zinkenträgers in seiner Lagerung verändern, ergibt sich daraus zwangsläufig auch eine geänderte Position der Spitzen der Haspelzinken relativ zur übrigen Haspel. Mit den angetriebenen Bewegungen der Treibstange können die Spitzen der Haspelzinken aufgrund der Zwangsführung über die Treibstange in einer unrunden Hüllkurve in Verlauf einer Umdrehung der Haspel gesteuert werden.

Wird die Treibstange mit dem Führungselement also entlang ihrer Erstreckungsrichtung in eine zumindest annähernd radiale Richtung nach innen oder außen bewegt, wird diese Bewegungskomponente über die Verbindung des Führungselements mit dem Zinkenträger in eine Drehung des Zinkenträgers übersetzt, durch die sich während einer Umdrehung der Haspel entsprechend unterschiedliche Drehstellungen des Zinkenträgers relativ zur übrigen Haspel ergeben. Mit diesen Drehbewegungen des Zinkenträgers werden zwangsläufig auch die Spitzen der damit verbundenen Haspelzinken in eine gewünschte Richtung verstellt.

Wenn an dieser Stelle von einer Bewegung der Treibstange in eine radiale Richtung die Rede ist, so muss diese Bewegung ausgehend von der Drehachse der Haspel nicht in eine genau radiale Richtung gerichtet sein. Mit einer Bewegung in eine radiale Richtung ist eine Bewegung gemeint, die zumindest eine Bewegungskomponente enthält, durch die sich das nach außen weisende Ende Treibstange von der Drehachse der Haspel entfernt oder an diese annähert. Die Treibstange muss auch nicht zwingend so ausgerichtet sein, dass ihre Längserstreckungsrichtung genau auf die Drehachse der Haspel zeigt. Sie kann vielmehr auch so angeordnet sein, dass ihre Längsmittelachse die Drehachse der Haspel nicht schneidet.

Der Antrieb der Treibstange kann beispielsweise über eine Kulissenbahn erfolgen, in der das dem Zinkenträger angewandte Ende der Treibstange geführt ist. Die Kulissenbahn kann exzentrisch zur Drehachse des Haspelzentralrohres versetzt angeordnet sein, oder sie weist einen unrunden Bahnverlauf auf.

Nach einer Ausgestaltung der Erfindung ist der einem Zinkenträger zugeordnete Kraftspeicher als Blattfeder ausgestaltet. Blattfedern sind je nach Material und Auslegung mechanisch hoch belastbar, einfach zu montieren und reparieren und genau auf eine gewünschte Federkennlinie hin auslegbar. Blattfedern können aus einem metallischen Material hergestellt sein, wie beispielsweise einem Federstahl, sind aber auch Ausführungen in Kunststoff möglich, wobei der Kunststoff dann vorteilhaft faserverstärkt ist, beispielsweise als GfK- oder CfK-Faserverbundbauteil.

Nach einer Ausgestaltung der Erfindung weist die Erntebergungsvorrichtung mehrere nebeneinander angeordnete und gelenkig miteinander verbundene Rahmenabschnitte und mehrere nebeneinander angeordnete und gelenkig miteinander verbundene Haspeln auf, wobei die Haspeln nach den Merkmalen der vorhergehenden Ansprüche ausgestaltet sind. Für die Erfindung spielt es keine Rolle, ob die Erntebergungsvorrichtung über ihre Arbeitsbreite hinweg mit einem einzigen starren Rahmen versehen ist, der sich über die gesamte Arbeitsbreite der Erntebergungsvorrichtung erstreckt, oder ob sie in mehrere Rahmenabschnitte unterteilt ist, die gelenkig miteinander verbunden sind und die jeweils für sich nur Teilarbeitsbreiten abdecken. Im letzteren Fall kann auch die Haspel mehrteilig ausgeführt sein, wobei jedes oder einige der Haspelsegmente erfindungsgemäß ausgestaltet sein können. Die Zahl und Breite der in einer mehrteiligen Erntebergungsvorrichtung verwendeten Haspeln muss nicht der Zahl und Breite der Rahmenabschnitte entsprechen.

Nach einer Ausgestaltung der Erfindung ist für die Funktion des Stützelements ein nicht drucksteifes Haltemittel verbaut, das an zumindest einem ersten Punkt mit dem längenvariablen Kraftspeicher verbunden und an zumindest einem zweiten Punkt ortsfest gehalten ist und in seiner Normalstellung den längenvariablen Kraftspeicher unter einer Vorspannung hält. Diese Konstruktion ist leicht, kostengünstig und bauraumsparend. Für die Ein- und Ausfederbewegungen des Kraftspeichers werden Bewegungen von Führungselementen an verschleißbehafteten und verschmutzungsempfindlichen Kulissenführungen entlang vermieden, weil das nicht drucksteife Haltemittel erschlafft, sobald der Kraftspeicher einfedert, und dabei keinerlei Bewegungskontrolle benötigt, um beim anschließenden Rückfedern des Kraftspeichers wieder seine Normalstellung einnehmen zu können.

Nach einer Ausgestaltung der Erfindung ist die Führungskulisse als ein Exzenterantrieb ausgestaltet und eine Drehbewegung zwischen dem Exzenterantrieb und einem Speichenelement ist mittels eines Lenkers synchronisiert, der das Speichenelement und den Exzenterantrieb gelenkig miteinander verbindet, wobei sich die Längsachse des Lenkers zumindest teilweise in die Drehrichtung der Haspel erstreckt. Wenn für die Funktion des Stützelements ein nicht drucksteifes Haltemittel verbaut ist, kommt in die Steuerung der Kurvenbahn der Haspelzinken eine Elastizität hinein, durch die die Haspelzinken nicht mehr mit der gewünschten Präzision in ihren Schwenkbewegungen gesteuert wären. Um Drehwinkelverstellungen des Exzenterantriebs, insbesondere wenn dieser mittels eines Exzenterrings erfolgt, relativ zum Tragkörper zu begrenzen oder ganz zu unterbinden, kann der Lenker eingesetzt werden. Wenn der Lenker so platziert ist, dass sich die Längsachse des Lenkers zumindest teilweise in die Drehrichtung der Haspel erstreckt, ergibt sich eine gute Kraftübertragung zwischen dem Exzenterantrieb und dem Speichenelement.

Nach einer Ausgestaltung der Erfindung ist der Lenker über Befestigungsmittel in verschiedenen Positionen festlegbar. Je nachdem, in welcher Position der Lenker relativ zur Haspel daran festgelegt ist, ergeben sich daraus unterschiedliche Schwenkstellungen der Haspelzinken. So kann es beispielsweise vorteilhaft sein, die Haspelzinken aus der Arbeitsstellung in eine Transportstellung zu verschwenken, um eventuelle Beschädigungen während des Transports zu vermeiden. Als Befestigungsmittel können beispielsweise mehrere in einem Abstand zueinander positionierte Bohrungen im Lenker vorgesehen sein, die wahlweise für die Verschraubung mit der Haspel verwendet werden können. Anstelle einer Verschraubung über verschiedene Bohrungen sind auch andere Befestigungsmittel möglich, wie beispielsweise am Lenker ausgebildete Rastnasen, die in entsprechende Aufnahmelöcher einsteckbar sind, oder andere bekannte Lösungen zur Befestigung eines Bauteils in unterschiedlichen Positionen.

Nach einer Ausgestaltung der Erfindung sind die Biegemomente, die erforderlich sind, um die Form von zumindest zwei Haspelzinken in Rotationsrichtung zu verändern, größer als das Kraftmoment, das erforderlich ist, um die Form des längenvariablen Kraftspeichers zu verändern. Da die Haspelzinken vom längenvariablen Kraftspeicher gegen Überlast abgesichert sind, können diese in Rotationsrichtung weniger flexibel ausgebildet werden. Um ein Abbrechen der Haspelzinken zu vermeiden, sind diese bisher häufig aus einem relativ weichen Kunststoff hergestellt worden, der eine Formveränderung erlaubt, wenn ein zu hohes Biegemoment auf den jeweiligen Haspelzinken einwirkt. Der Nachteil dieser Lösung besteht darin, dass die Haspelzinken das Erntegut in schwierigen Erntebedingungen nicht ausreichend aggressiv aufrechen. Durch die neuartige Überlastsicherung können die Haspelzinken nun wieder steifer ausgeführt werden, sodass sie unter der Einwirkung eines höheren Biegemoments zumindest wesentlich länger ihre Ursprungsform und damit auch ihre Förderaggressivität beibehalten. Sie können dabei weiterhin aus einem Kunststoff hergestellt sein, der sich aber weniger leicht verformt. Sie können auch aus einem metallischen Werkstoff gefertigt sein.

Nach einer Ausgestaltung der Erfindung sind zwischen den Haspelzinken und den Zinkenträgern keine gesonderten Mittel zur Überlastsicherung vorhanden. Die Überlastsicherung für die Haspelzinken mittels des längenvariablen Kraftspeichers macht es möglich, auf bisher gebräuchliche Überlastsicherungen zwischen den Haspelzinken und den Zinkenträgern, wie beispielsweise Spiralfedern, zu verzichten. Der Montageaufwand und das Gewicht der Haspel werden dadurch verringert.

Weitere Vorteile und Einzelheiten ergeben sich aus den Unteransprüchen und einem in den Zeichnungen dargestellten Ausführungsbeispiel mit weiteren Details. Es zeigen:
- Fig. 1:: eine Ansicht von schräg vorne auf eine Erntebergungsvorrichtung mit einem ersten Ausführungsbeispiel der Erfindung,
- Fig. 2:: eine Ansicht auf eine Haspel von schräg vorne,
- Fig. 3:: die in Fig. 2 gezeigte Haspel in einer vergrößerten Ansicht auf die Stirnseite, wobei alle Federzinken in der Normalstellung stehen,
- Fig. 4:: die in Fig. 3 gezeigte Ansicht auf die Haspel, wobei allerdings ein Haspelzinken in einer eingefederten Stellung gezeigt ist, und
- Fig. 5:: eine schematische Seitenansicht eines zweiten Ausführungsbeispiels.

Bei den Darstellungen handelt es sich im Wesentlichen um konkrete Ausführungsbeispiele. Die Erfindung ist hingegen nicht auf die dargestellten Ausführungsbeispiele beschränkt, sondern kann in fachmännischer Weise abgewandelt werden, um sie an einen bestimmten Anwendungsfall anzupassen.

Soweit dienlich sind in allen Figuren einander entsprechende Bauteile mit identischen Bezugsziffern bezeichnet. Aus Gründen der Übersichtlichkeit sind bei mehrfach auftretenden Bauteilen jedoch nicht stets alle mit Bezugsziffern versehen.

Nachfolgend werden mehrere Ausführungsbeispiele vorgestellt, wie die Stützelemente 30 an einem Exzenterantrieb 44 abgestützt sein können, der die Stützelemente 30 während einer vollen Umdrehung der Haspel 12 in radialer Richtung in unterschiedliche Positionen zum Tragkörper 20 bewegt, und zwischen dem Exzenterantrieb 44 und einer Verbindung eines jeweiligen Stützelements 30 mit einem zugehörigen Zinkenträger 22 ein längenvariabler Kraftspeicher 32 zwischengeschaltet ist, der unter Einwirken einer Last L auf die Haspelzinken 28 eine Ausweichbewegung der Haspelzinken 28 zulässt.

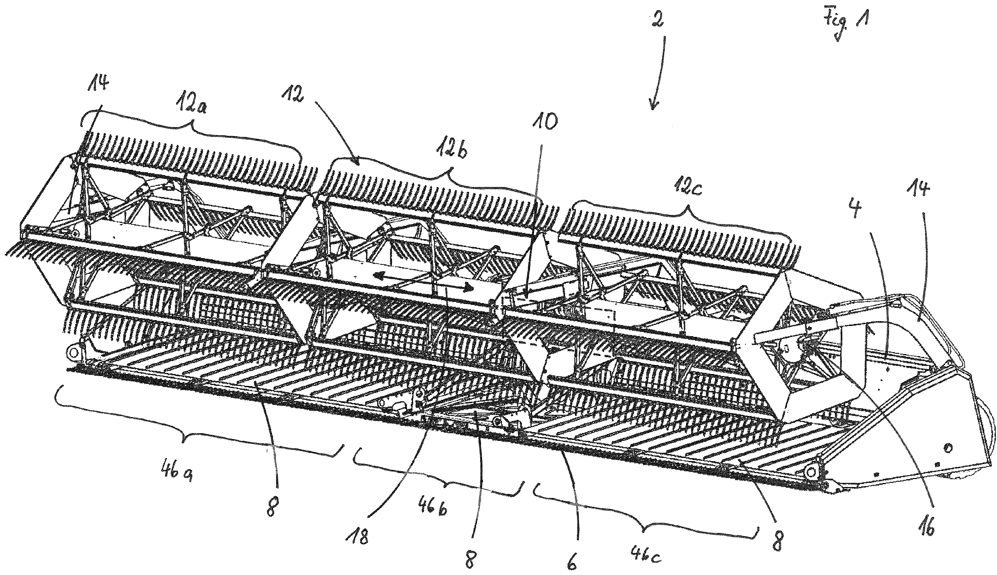

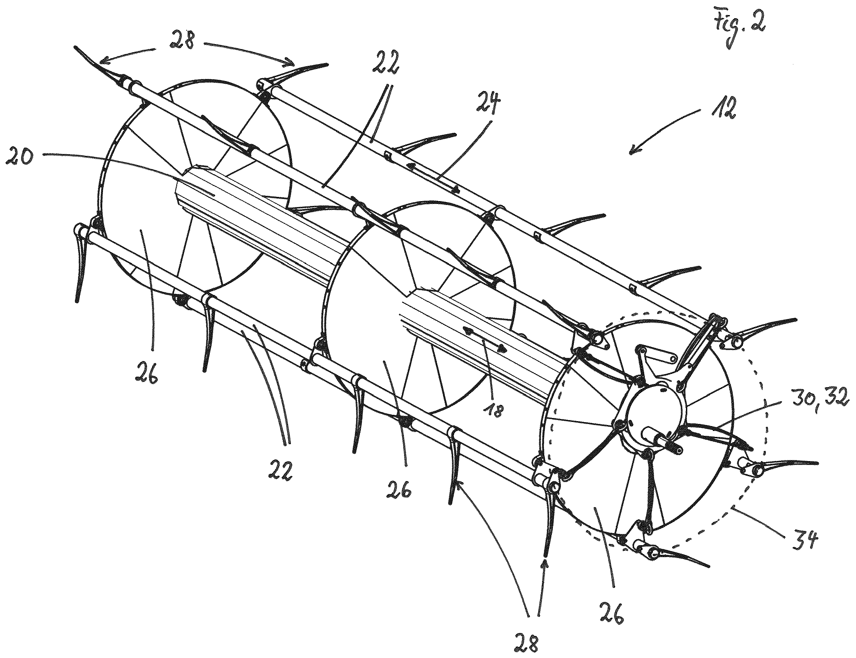

In Fig. 1 ist eine Erntebergungsvorrichtung 2 mit einem Rahmen 4, einer Schneidvorrichtung 6, einer im Ausführungsbeispiel als Bandförderer ausgebildeten Fördervorrichtung 8 und einer rückseitig angeordneten, zeichnerisch nur in gestrichelten Linien schematisch dargestellten Übergabeschnittstelle 10 gezeigt. Im vorderen Bereich der Erntebergungsvorrichtung 2 befindet sich oberhalb der Schneidvorrichtung 6 eine Haspel 12, die als eine der Fördereinrichtungen in der Erntebergungsvorrichtung an ihren Stirnseiten jeweils an einem höhenverstellbaren und mit dem Rahmen 4 verbunden Haltearm 14 gehalten ist. Die Haspel 12 wird mit einer Antriebsvorrichtung 16 bei der Erntearbeit in eine drehende Bewegung versetzt, bei der sie um ihre Längsachse 18 rotiert. Auf einem in Fig. 2 gestrichelt dargestellten Kreis 34 um die Längsachse 18 der Haspel 12 herum verteilt angeordnet sind eine Anzahl von Zinkenträgern 22.

In dem in Fig. 1 gezeigten Ausführungsbeispiel weist die Erntebergungsvorrichtung 2 mehrere nebeneinander angeordnete und gelenkig miteinander verbundene Rahmenabschnitte 46a, 46b, 46c und mehrere nebeneinander angeordnete und gelenkig miteinander verbundene Haspeln 12a, 12b, 12c auf, die nach der Lehre der vorliegenden Erfindung ausgestaltet sind.

Die Fig. 2 zeigt eine Haspel 12 mit dem ersten Ausführungsbeispiel in einer vereinfachten detaillierteren Darstellung. In dieser Ansicht ist der als ein einzelnes Rohr ausgeführte Tragkörper 20 erkennbar, mit dem die Zinkenträger 22 verbunden sind. Die Längsachse 24 der Zinkenträger erstreckt sich im Ausführungsbeispiel in einer Richtung parallel zur Längsachse 18 der Haspel 12. Der Tragkörper 20 und die Zinkenträger 22 sind über Speichenelemente 26 miteinander verbunden. An den Zinkenträgern 22 sind über deren Länge verteilt jeweils eine Anzahl von Haspelzinken 28 angeordnet. Die Haspelzinken 28 sind an den Zinkenträgern 22 drehfest montiert, und die Zinkenträger 22 sind drehbeweglich mit den Speichenelementen 26 verbunden. An der Stirnseite der Haspel 12 sind die Komponenten angeordnet, mit denen die Winkelstellung der Haspelzinken 28 während einer Umdrehung der Haspel 12 gesteuert wird. Die Komponenten schließen die Stützelemente 30 und Kraftspeicher 32 mit ein.

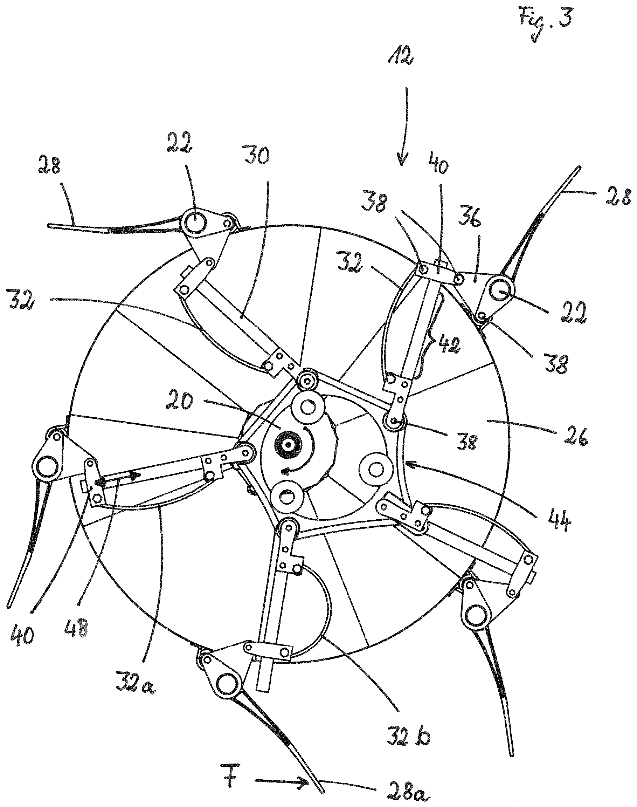

Die Rotationsrichtung der Haspel 12 ist in Fig. 3 durch einen entsprechenden Pfeil um die zentrale Welle herum angezeigt. Jeder Zinkenträger 22 ist, wie in Fig. 3 gezeigt, über ein dem Zinkenträger 22 zugeordnetes Stützelement 30 in einer Drehlage gehalten. Zwischen dem Zinkenträger 22 und dem Stützelement 30 ist ein längenvariabler Kraftspeicher 32 zwischengeschaltet, der unter Einwirken einer Last auf die Haspelzinken 28 eine Ausweichbewegung der Haspelzinken 28 zulässt. In dem in Fig. 3 dargestellten ersten Ausführungsbeispiel ist der einem Zinkenträger 22 zugeordnete Kraftspeicher 32 als Blattfeder ausgestaltet. Andere Ausführungen eines Kraftspeichers sind natürlich möglich. Während der Kraftspeicher 32a in Fig. 3 in einem entspannten Zustand gezeigt ist, bei dem sich auch der zugehörige Haspelzinken in einer Normalstellung befindet, ist an dem Kraftspeicher 32b durch dessen stärker gebogene Form erkennbar, dass er durch die auf den Haspelzinken 28a einwirkende Kraft F seine Form verändert hat. Die Kraft F hat gleichzeitig den Haspelzinken 28a aus seiner Normalstellung in die in Fig. 3 gezeigte Position gedrückt, in der er sich in einer Drehlage befindet, in der die Spitze des Haspelzinkens 28a aus der Normalstellung entgegen dem Uhrzeigersinn in die Kraftrichtung der einwirkenden Kraft F verlagert ist. Sobald die Kraft F entfällt, bewegt sich der Kraftspeicher 32b wieder zurück in seine Normalstellung und bewegt dabei auch den Haspelzinken 28a zurück in seine Normalstellung.

Die in Fig. 3 dargestellten Zinkenträger 22 sind drehbeweglich mit den Speichenelementen 26 verbunden, indem die Zinkenträger 22 drehfest an Laschen 36 gehalten sind, die ihrerseits jeweils über ein Drehgelenk 38 verdrehbar mit den Speichenelementen 26 verbunden sind, und ein einem Zinkenträger 22 zugeordneter Kraftspeicher 32 zumindest mit einer Lasche 36 des zugeordneten Zinkenträgers 22 und wahlweise auch mit dem ihm zugeordneten Stützelement 30 über Drehgelenke 38 drehbeweglich verbunden ist. Der jeweils einem Zinkenträger 22 zugeordnete Kraftspeicher 32 ist an seinem dem Zinkenträger 22 zugewandten Ende an ein Führungselement 40 angebunden, dessen Beweglichkeit entlang des Verstellwegs 48 mittels einer Führungskulisse 42 zwangsgeführt ist. Der Zinkenträger 22 ist im gezeigten Ausführungsbeispiel indirekt nur über die Lasche 36 und ein Drehgelenk 38 mit dem Führungselement 40 und nur über dieses mit dem Kraftspeicher 32 verbunden. Abweichend vom gezeigten Ausführungsbeispiel ist es auch möglich, den Zinkenträger 22 direkt über ein Drehgelenk 38 mit dem Führungselement 40 und/oder mit dem Kraftspeicher 32 zu verbinden.

In dem in Fig. 3 gezeigten ersten Ausführungsbeispiel ist die Führungskulisse 42 als eine in einer radialen Richtung zur Drehachse der Haspel 12 beweglich angetriebene Treibstange ausgebildet, an der das dem Zinkenträger 22 abgewandte Ende des Kraftspeichers 32 an einer fixen Position befestigt ist. Die fixe Position ist als ein Drehgelenk 38 ausgebildet, über die die Führungskulisse 42 mit dem Exzenterantrieb 44 verbunden ist.

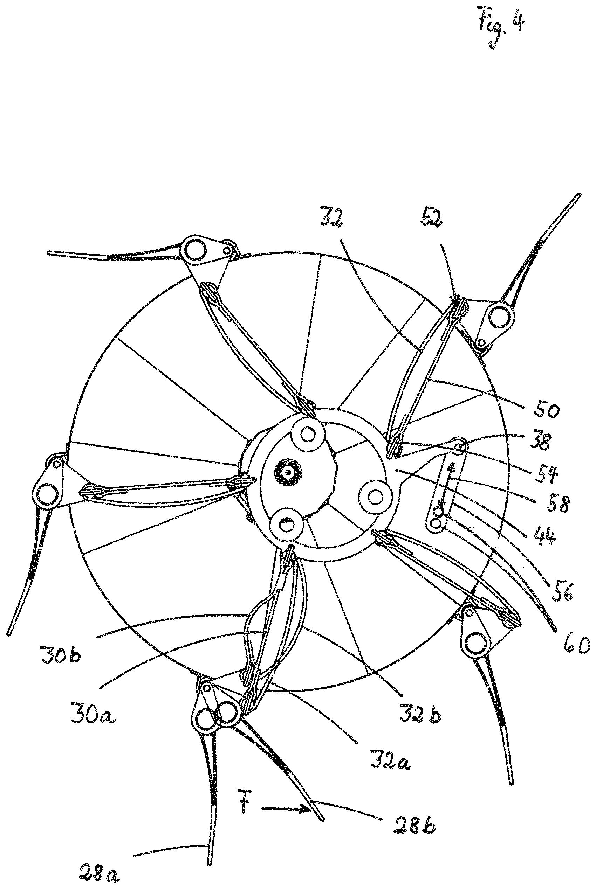

In Fig. 4 ist ein Ausführungsbeispiel der Erfindung gezeigt, bei dem die Funktion des Stützelements 30 mit einem nicht drucksteifen Haltemittel 50 ausgefüllt ist. Als nicht drucksteifes Haltemittel 50 ist im Ausführungsbeispiel beispielsweise ein Seil verwendet, das an zumindest einem ersten Punkt 52 mit dem längenvariablen Kraftspeicher 32 verbunden und an zumindest einem zweiten Punkt 54 ortsfest gehalten ist. Wenn das nicht drucksteife Haltemittel 50 in seiner Normalstellung den längenvariablen Kraftspeicher 50 unter einer Vorspannung hält, wird es gegen den zweiten Punkt 54 gespannt gehalten. Das nicht drucksteife Haltemittel 50 und der variable Kraftspeicher 50 bilden auf diese Weise im Normalbetrieb ohne die Einwirkung einer Überlast eine Funktionseinheit, die dazu geeignet ist, Steuerimpulse einer Kurvenbahnsteuerung für die Haspelzinken 28 zu übertragen. Im Ausführungsbeispiel ist das nicht drucksteife Haltemittel 50 mit dem Exzenterantrieb 44 verbunden. Dessen exzentrische Drehbewegung wird über das gespannt gehaltene nicht drucksteife Haltemittel 50 durch das Zusammenwirken mit dem Kraftspeicher 32 als Funktionseinheit auf den zugehörigen Zinkenträger 22 übertragen, so dass sich die daran befestigten Haspelzinken 28 im Verlauf einer Umdrehung der Haspel 12 entlang einer gesteuerten Bewegungsbahn bewegen.

In der Fig. 4 ist auch gezeigt, wie sich die Funktionseinheit mit dem nicht drucksteifen Haltemittel 50 und dem Kraftspeicher 32 unter Einwirkung einer Überlast verhält. Während sich der Haspelzinken 28a, das nicht drucksteife Haltemittel 50a und der Kraftspeicher 32a ohne die Einwirkung einer Überlast jeweils in den in Fig. 4 eingezeichneten Positionen befinden, verändert sich die räumliche Lage dieser Bauteile relativ zur übrigen Haspel 12 in die Positionen, die in Fig. 4 für den Haspelzinken 28b, das nicht drucksteife Haltemittel 50b und den Kraftspeicher 32b eingezeichnet sind. Da die Überlast die Bauteillänge des Kraftspeichers 32 entlang des Verstellwegs verkürzt, ist das nicht drucksteife Haltemittel 50 unter der Einwirkung einer Überlast auf den zugehörigen Haspelzinken 28 nicht mehr gespannt gehalten und hängt nur noch schlaff zwischen den Punkten 52, 54. Der Kraftspeicher 32 ist durch die einwirkende Überlast jedoch vorgespannt und mit einer Rückstellkraft aufgeladen. Sobald die Überlast entfällt, bewegen sich der Haspelzinken 28, das nicht drucksteife Haltemittel 50 und der Kraftspeicher 32 wieder in ihre Normalstellung zurück.

Um eine Drehbewegung zwischen dem Exzenterantrieb 44 und dem Speichenelement 26 zu synchronisieren, ist ein Lenker 56 verwendet, der das Speichenelement 26 und den Exzenterantrieb 44 über ein Drehgelenk 38 gelenkig miteinander verbindet. Die Längsachse 58 des Lenkers 56 erstreckt sich zumindest teilweise in die Drehrichtung der Haspel 12 und damit zumindest teilweise in die Kraftflussrichtung.

Der Lenker 56 verfügt über mehrere Bohrungen, von denen jeweils eine zusammen mit einer entsprechenden Fixierschraube, die in eine der Bohrungen eingesteckt und mit der Haspel 12 verschraubt werden kann, als Befestigungsmittel 60 dient, um den Lenker 56 wahlweise in verschiedenen Positionen festlegen zu können. Je nachdem, welche der Bohrungen zur Fixierung des Lenkers 56 genutzt ist, ergibt sich über das Drehgelenk 38 und eine entsprechende Verdrehung des Exzenterantriebs 44 eine unterschiedliche Schwenkstellung der Haspelzinken 28.

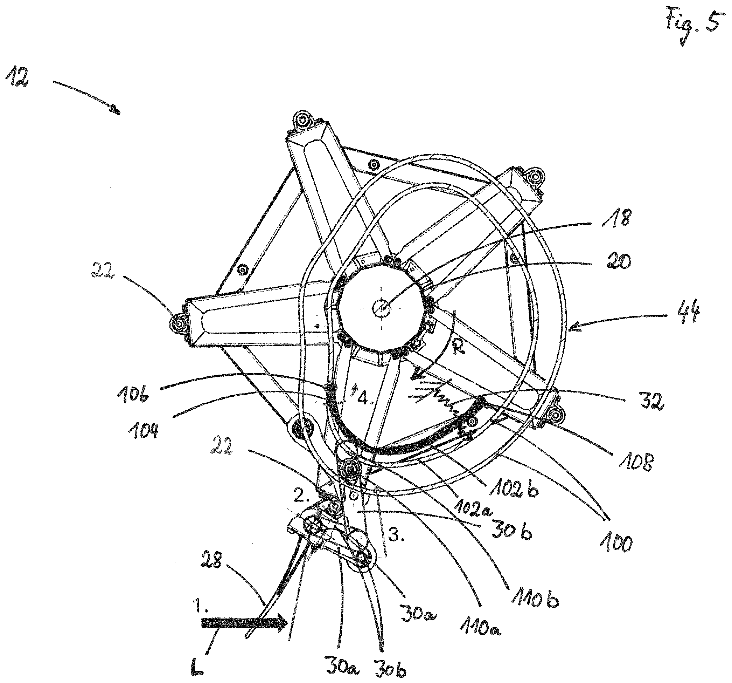

In Fig. 5 ist eine schematische Seitenansicht eines zweiten Ausführungsbeispiels gezeigt. Der Exzenterantrieb 44 weist eine Kulissenbahn 100 auf, in der ein Wandabschnitt 102 beweglich gelagert ist. Der beweglich gelagerte Wandabschnitt 102 der Kulissenbahn 100 ist gegen den längenvariablen Kraftspeicher 32 abgestützt. Der beweglich gelagerte Wandabschnitt 102 weist an seinem in Rotationsrichtung R der Haspel 12 gesehen hinteren Ende 104 ein Schwenklager 106 auf und ist an seinem vorderen Ende 108 vom längenvariablen Kraftspeicher 32 abgestützt.

Der beweglich gelagerte Wandabschnitt 102 befindet sich in einem Abschnitt der Kulissenbahn 100, in dem die Kulissenbahn 100 die Stützelemente 30 führt, deren Zinkenträger 22 sich bei einer Rotationsbewegung der Haspel 12 im Bereich der tiefsten Position während eines Umlaufs bewegen. Die Stützelemente 30 sind an einem jeweiligen Ende 110 in der Kulissenbahn 100 geführt. Der beweglich gelagerte Wandabschnitt 102 federt gegen die Kraft des längenvariablen Kraftspeichers 32 in die Richtung der Längsachse 18 der Haspel 12 ein. Die Stützelemente 30 sind den Zinkenträgern 22 in Rotationsrichtung R nacheilend angeordnet.

In Fig. 5 ist für das zweite Ausführungsbeispiel der Bewegungsablauf der betroffenen Komponenten dargestellt, der sich in einer Überlastsituation ergibt. An der Position 1. wirkt eine Last L auf die Haspelzinken 28 ein, durch die der Haspelzinken 28 in Richtung der Last L durch eine Drehung des Zinkenträgers 22 an der Position 2. in Richtung des dort gestrichelten Pfeils gedrückt wird. Durch die Last L wird dabei das Stützelement 30 aus der Position 30a in die Position 30b entlang des an der Position 3. eingezeichneten Pfeils verlagert. Die Verlagerungsbewegung des Stützelements 30 ist möglich, weil sich das in der Kulissenbahn 100 geführte Ende 110 des Stützelements 30 aus der Position auf 100a in die Position 100b an dem beweglich gelagerten Wandabschnitt 102 entlang bewegt, der unter Einwirkung der Last L an der Position 4. entlang des dort eingezeichneten gestrichelten Pfeils mit seinem hinteren Ende 108 um die Schwenkachse 106 herum gegen die Kraft des längenvariablen Kraftspeichers 32 einfedert. Fällt die Last L fort, schwenkt der beweglich gelagerte Wandabschnitt 102 von der Rückstellkraft des längenvariablen Kraftspeichers 32 angetrieben in die Ausgangsstellung 102a zurück, wie das durch den Doppelpfeil angedeutet ist.

### Bezugszeichenliste

- 2: Erntebergungsvorrichtung
- 4: Rahmen
- 6: Schneidvorrichtung
- 8: Fördervorrichtung
- 10: Übergabeschnittstelle
- 12: Haspel
- 14: Haltearm
- 16: Antriebsvorrichtung
- 18: Längsachse Haspel
- 20: Tragkörper
- 22: Zinkenträger
- 24: Längsachse Zinkenträger
- 26: Speichenelement
- 28: Haspelzinken
- 30: Stützelement
- 32: Kraftspeicher
- 34: Kreis
- 36: Lasche
- 38: Drehgelenk
- 40: Führungselement
- 42: Führungskulisse
- 44: Exzenterantrieb
- 46: Rahmenabschnitt
- 48: Verstellweg
- 50: nicht drucksteifes Haltemittel
- 52: erster Punkt
- 54: zweiter Punkt
- 56: Lenker
- 58: Längsachse
- 60: Befestigungsmittel
- 100: Kulissenbahn
- 102: beweglich gelagerter Wandabschnitt
- 104: hinteres Ende
- 106: Schwenklager
- 108: vorderes Ende
- 110: in der Kulissenbahn geführtes Ende eines Stützelements
- L: einwirkende Last
- R: Rotationsrichtung

## Patentansprüche

1. Erntebergungsvorrichtung (2) mit einem Rahmen (4), zumindest einer mit dem Rahmen (4) verbundenen Schneidvorrichtung (6), einer Anzahl von Fördervorrichtungen (8) und einer Übergabeschnittstelle (10), eine der Fördervorrichtungen (8) ist als eine Haspel (12) ausgebildet, die über höhenverstellbare Haltearme (14) mit dem Rahmen (4) verbunden und die über eine Antriebsvorrichtung (16) um ihre Längsachse (18) rotierend antreibbar ist, die Haspel (12) weist einen zentralen Tragkörper (20) auf, der sich in einer Richtung entlang der Längsachse (18) der Haspel (12) erstreckt, die Haspel (12) weist außerdem eine Anzahl von Zinkenträgern (22) auf, deren Längsachsen (24) sich in einer Richtung entlang der Längsachse (18) der Haspel (12) und parallel zum zentralen Tragkörper (20) erstrecken und die auf einem Kreis (34) um die Längsachse (18) der Haspel (12) herum verteilt angeordnet sind, der zentrale Tragkörper (20) ist mit den Zinkenträgern (22) über beabstandet zueinander über die Längsachse (18) der Haspel (12) verteilt angeordnete Speichenelemente (26) verbunden, an jedem der Zinkenträger (22) sind über deren Länge verteilt eine Anzahl von Haspelzinken (28) drehfest montiert, und die Zinkenträger (22) sind drehbeweglich mit den Speichenelementen (26) verbunden, **dadurch gekennzeichnet, dass** jeder Zinkenträger (22) über ein dem Zinkenträger (22) zugeordnetes Stützelement (30) in einer Drehlage gehalten ist, die Stützelemente (30) an einem Exzenterantrieb (44) abgestützt sind, der die Stützelemente (30) während einer vollen Umdrehung der Haspel (12) in radialer Richtung in unterschiedliche Positionen zum Tragkörper (20) bewegt, und zwischen dem Exzenterantrieb (44) und einer Verbindung eines jeweiligen Stützelements (30) mit einem zugehörigen Zinkenträger (22) ein längenvariabler Kraftspeicher (32) zwischengeschaltet ist, der unter Einwirken einer Last (L) auf die Haspelzinken (28) eine Ausweichbewegung der Haspelzinken (28) zulässt.

2. Erntebergungsvorrichtung (2) nach Anspruch 1, **dadurch gekennzeichnet, dass** der Exzenterantrieb (44) eine Kulissenbahn (100) aufweist, in der die Stützelemente (30) an einem jeweiligen Ende (110) geführt sind, ein Wandabschnitt (102) der Kulissenbahn (100) beweglich gelagert ist, und der beweglich gelagerte Wandabschnitt (102) der Kulissenbahn (100) gegen einen längenvariablen Kraftspeicher (32) abgestützt ist.

3. Erntebergungsvorrichtung (2) nach Anspruch 2, **dadurch gekennzeichnet, dass** der beweglich gelagerte Wandabschnitt (102) an seinem in Rotationsrichtung (R) der Haspel (12) gesehen hinteren Ende (104) ein Schwenklager (106) aufweist und an seinem vorderen Ende (108) vom längenvariablen Kraftspeicher (32) abgestützt ist.

4. Erntebergungsvorrichtung (2) nach einem der Ansprüche 2 oder 3, **dadurch gekennzeichnet, dass** sich der beweglich gelagerte Wandabschnitt (102) in einem Abschnitt der Kulissenbahn (100) befindet, in dem die Kulissenbahn (100) die Stützelemente (30) führt, deren Zinkenträger (22) sich bei einer Rotationsbewegung der Haspel (12) im Bereich der tiefsten Position während eines Umlaufs bewegen.

5. Erntebergungsvorrichtung (2) nach einem der Ansprüche 2 bis 4, **dadurch gekennzeichnet, dass** der beweglich gelagerte Wandabschnitt (102) gegen die Kraft des längenvariablen Kraftspeichers (32) in radialer Richtung auf die Längsachse (18) der Haspel (12) zu einfedert.

6. Erntebergungsvorrichtung (2) nach einem der Ansprüche 2 bis 5, **dadurch gekennzeichnet, dass** die Stützelemente (30) den Zinkenträgern (22) in Rotationsrichtung (R) nacheilend angeordnet sind.

7. Erntebergungsvorrichtung (2) nach Anspruch 1, **dadurch gekennzeichnet, dass** zwischen dem Zinkenträger (22) und dem Stützelement (30) ein längenvariabler Kraftspeicher (32) zwischengeschaltet ist, der unter Einwirken einer Last auf die Haspelzinken (28) eine Ausweichbewegung der Haspelzinken (28) zulässt.

8. Erntebergungsvorrichtung (2) nach Anspruch 7, **dadurch gekennzeichnet, dass** die Stützelemente (30) und Kraftspeicher (32) an zumindest einer Stirnseite der Haspel (12) angeordnet sind.

9. Erntebergungsvorrichtung (2) nach Anspruch 7 oder 8, **dadurch gekennzeichnet, dass** die Zinkenträger (22) drehbeweglich mit den Speichenelementen (26) verbunden sind, indem die Zinkenträger (22) drehfest an Laschen (36) gehalten sind, die ihrerseits jeweils über ein Drehgelenk (38) verdrehbar mit den Speichenelementen (26) verbunden sind, und ein einem Zinkenträger (22) zugeordneter Kraftspeicher (32) zumindest mit einer Lasche (36) des zugeordneten Zinkenträgers (22) und wahlweise auch mit dem ihm zugeordneten Stützelement (30) über Drehgelenke (38) drehbeweglich verbunden ist.

10. Erntebergungsvorrichtung (2) nach einem der vorhergehenden Ansprüche 7 bis 9, **dadurch gekennzeichnet, dass** der einem Zinkenträger (22) zugeordnete Kraftspeicher (32) an seinem dem Zinkenträger (22) zugewandten Ende an ein Führungselement (40) angebunden ist, dessen Beweglichkeit mittels einer Führungskulisse (42) zwangsgeführt ist, und der Zinkenträger (22) direkt oder indirekt nur über ein Drehgelenk (38) mit dem Führungselement (40) mittelbar mit dem Kraftspeicher (32) verbunden ist.

11. Erntebergungsvorrichtung (2) nach Anspruch 10, **dadurch gekennzeichnet, dass** die Führungskulisse (42) als ein Exzenterantrieb (44) ausgestaltet ist.

12. Erntebergungsvorrichtung (2) nach Anspruch 10 oder 11, **dadurch gekennzeichnet, dass** die Führungskulisse (42) mit einer in einer radialen Richtung zur Drehachse der Haspel (12) beweglich angetriebenen Treibstange verbunden ist, und das dem Zinkenträger (22) abgewandte Ende des Kraftspeichers (32) an einer fixen Position befestigt ist.

13. Erntebergungsvorrichtung (2) nach einem der vorhergehenden Ansprüche 7 bis 12, **dadurch gekennzeichnet, dass** der einem Zinkenträger (22) zugeordnete Kraftspeicher (32) als Blattfeder ausgestaltet ist.

14. Erntebergungsvorrichtung (2) nach einem der vorhergehenden Ansprüche 7 bis 13, **dadurch gekennzeichnet, dass** die Erntebergungsvorrichtung (2) mehrere nebeneinander angeordnete und gelenkig miteinander verbundene Rahmenabschnitte (46a, 46b, 46c) und mehrere nebeneinander angeordnete und gelenkig miteinander verbundene Haspeln (12a, 12b, 12c) aufweist, wobei die Haspeln (12a, 12b, 12c) nach den Merkmalen der vorhergehenden Ansprüche ausgestaltet sind.

15. Erntebergungsvorrichtung (2) nach einem der vorhergehenden Ansprüche 7 bis 14, **dadurch gekennzeichnet, dass** für die Funktion des Stützelements (30) ein nicht drucksteifes Haltemittel (50) verbaut ist, das an zumindest einem ersten Punkt (52) mit dem längenvariablen Kraftspeicher (32) verbunden und an zumindest einem zweiten Punkt (54) ortsfest gehalten ist und in seiner Normalstellung den längenvariablen Kraftspeicher (50) unter einer Vorspannung hält.

16. Erntebergungsvorrichtung (2) nach Anspruch 15, **dadurch gekennzeichnet, dass** die Führungskulisse (42) als ein Exzenterantrieb (44) ausgestaltet ist und eine Drehbewegung zwischen dem Exzenterantrieb (44) und einem Speichenelement (26) mittels eines Lenkers (56) synchronisiert ist, der das Speichenelement (26) und den Exzenterantrieb (44) gelenkig miteinander verbindet, wobei sich die Längsachse (58) des Lenkers (56) zumindest teilweise in die Drehrichtung der Haspel (12) erstreckt.

17. Erntebergungsvorrichtung (2) nach Anspruch 16, **dadurch gekennzeichnet, dass** der Lenker (56) über Befestigungsmittel (60) in verschiedenen Positionen festlegbar ist.

18. Erntebergungsvorrichtung (2) nach einem der vorhergehenden Ansprüche 7 bis 17, **dadurch gekennzeichnet, dass** die Biegemomente, die erforderlich sind, um die Form von zumindest zwei Haspelzinken (28) in Rotationsrichtung zu verändern, größer sind als das Kraftmoment, das erforderlich ist, um die Form des längenvariablen Kraftspeichers (32) zu verändern.

19. Erntebergungsvorrichtung (2) nach einem der vorhergehenden Ansprüche 7 bis 18, **dadurch gekennzeichnet, dass** zwischen den Haspelzinken (28) und den Zinkenträgern (22) keine gesonderten Mittel zur Überlastsicherung vorhanden sind.
